# EUROPEAN PATENT APPLICATION

(11) **EP 1 340 828 A1**
(43) Date of publication of application: **03.09.2003**
(21) Application number: 03425063.9
(22) Date of filing: 13.02.2003
(51) Int. Cl.: C22C 21/06, C22C 21/08, F16K 27/04, E03C 1/04

(54) **Tap made from cast aluminum alloy and use of an aluminum alloy therefor**

(30) Priority: 27.02.2002 IT MI20020385
(71) Applicant: Fonderie Dellatorre S.R.L., 28883 Gravellona Toce (Verbania) (IT)
(72) Inventor: Ruga, Marco, 28925 Verbania Suna (Verbania) (IT)
(74) Representative: Tansini, Elio Fabrizio

(57) **Abstract**

The invention relates to a tap (1) comprising a main body (2) defining at least an inlet duct (3) and at least an outlet duct (4), a valve group (5) engaged within said main body (2) to open and close the fluid communication between said inlet and outlet ducts, characterized in that at least said main body (1) is carried out with an alloy of aluminum and magnesium.

## Description

The present invention relates to a tap, in particular a tap in melted aluminum. Moreover, the present invention relates to the use of an aluminum alloy for carrying out taps.

It is known that taps made of brass alloys are present on the market. The essential components of a brass alloy are copper and zinc, in different ratios one with respect to the other.

Copper and zinc contained in the brass alloy tend to oxidize in a short time if they come into contact with atmospheric oxygen. Oxidation produces a mixture of copper and zinc oxides. Said mixture of oxides builds a visible coating on the manufactured item, which is both unwanted and noxious. In order to avoid the oxidation process of the brass alloy it is therefore necessary to carry out further processing on the manufactured item. Thus, after carrying out a tap in a brass alloy it is necessary to treat the manufactured item with a chroming or painting process using suitable protective paints in order to keep the shine and brightness of the unoxidized brass alloy.

It is known that chroming processes are highly noxious from an environmental point of view. As a matter of fact, chrome baths used for chroming processes cause a high pollution to the environment. That is why treatments including the use of chrome baths are strongly decreasing. Furthermore, it is known that brass alloys contain lead, which is known to be a dangerous pollutant. Lead contained in brass is a serious problem due to the high danger represented by lead- as food contaminant. In order to solve this problem a series of processes involving de-leading of brass alloys has been developed, aiming at eliminating from brass alloys traces of lead. However, de-leading processes for brass alloys help to increase the cost of the objects obtained from working processes of the brass alloy.

Moreover, it is known that brass alloys are not classified as food alloys. In practice, from a chemical point of view in qualitative and quantitative terms, brass alloys tend to release their components in time, for instance copper and zinc. The gradual and continuous release of copper and zinc in time is a source of pollution for food. As a consequence, a tap carried out using a brass alloy is a source of contamination for water, especially when the latter remains unused within said tap for a long time.

Trying to solve some of the aforesaid drawbacks it has been suggested to use steel alloys for taps and fittings. However, the use of steel results in long workings and higher costs. Furthermore, due to its chemical/physical properties steel has a drawback deriving from its low workability with respect to brass alloys.

Conversely, brass is highly advantageous since it can be worked by melting in different ways, thus allowing to obtain a large variety of objects having very popular stylistic shapes.

Therefore, there is the need to have on the market taps and fittings that do not have the drawbacks of the prior art. In particular, there is the need for a tap having characteristics and properties in compliance with health regulations concerning food contamination. Still more particularly, it is important to have a tap that, once it is carried out as a raw manufactured item, does not have to be further processed with other working steps in order to prevent material oxidation or wear and tear.

The main aim of the present invention is therefore to provide for a tap complying with the requirements of health regulations concerning food contamination.

A further aim of the present invention is to carry out a tap that is cheap and easy to carry out.

Another aim of the present invention is to suggest the use of a new alloy having such chemical/physical properties as to protect the manufactured item obtained from degradation with atmospheric oxygen.

Still another aim of the present invention is to suggest the use of a new alloy complying with the requirements of health regulations concerning food contamination.

These and still other aims, which will be evident from the following detailed description, have been achieved by the Applicant, who has found it useful to use an aluminum alloy to carry out taps.

A first object of the present invention is therefore a tap in melted aluminum having the essential characteristics as they are listed in the enclosed claims.

A further object of the present invention is the use of an aluminum alloy for carrying out taps and fittings in melted aluminum, whose essential characteristics are listed in the enclosed claims.

Further technical characteristics and the advantages of the invention will be more evident form the detailed description of a preferred though not exclusive embodiment of a tap carried out according to the present invention.

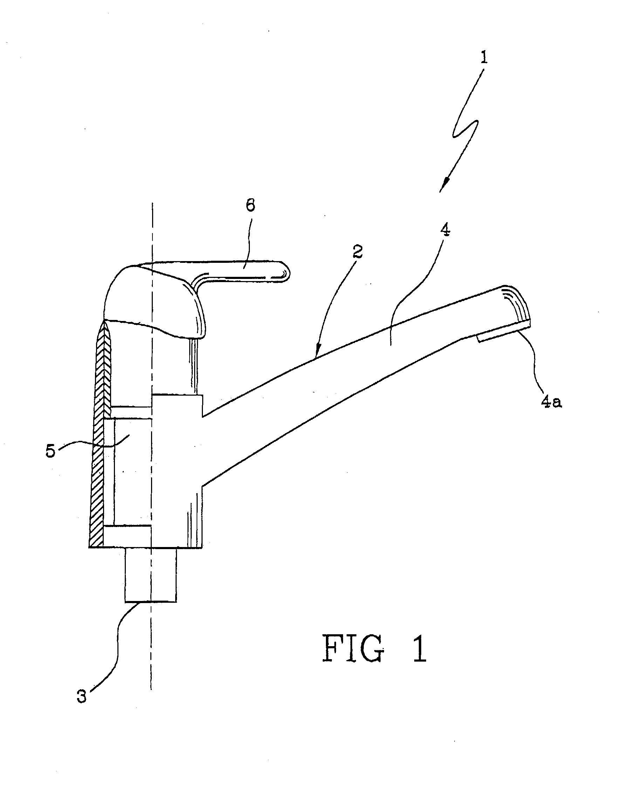

Said description will be hereinafter stated with reference to the enclosed drawing, provided to a mere indicative and therefore non-limiting purpose, whose only figure represents a tap according to the present invention globally referred to with 1.

The tap 1 comprises a main body 2 defining at least an inlet duct 3, which can be connected to a water network, and at least an outlet duct 4 ending up with a supply nozzle 4a. Within the main body 2 a valve group 5 is operatively engaged, which can be actuated for instance by means of an outer control knob 6 to open and close selectively the fluid communication between the inlet duct 3 and the outlet duct 4, thus resulting in the activation and interruption of water supply through the nozzle 4a.

According to the present invention it is provided that at least the main body 2 of the tap 1 is carried out in an aluminum and magnesium alloy.

More particularly, the alloy according to the present invention comprises an amount of magnesium of 1 to 10% by weight, with respect to the total weight of the alloy composition.

Preferably, the alloy according to the present invention comprises an amount of magnesium of 2 to 8% by weight, with respect to the total weight of the alloy composition.

Advantageously, the alloy according to the present invention comprises an amount of magnesium of 2.5 to 6% by weight, with respect to the total weight of the alloy composition.

Preferably, the alloy according to the present invention comprises an amount of aluminum of 90 to 99% by weight, with respect to the total weight of the alloy composition.

Advantageously, the alloy according to the present invention comprises an amount of aluminum of 92 to 98% by weight, with respect to the total weight of the alloy composition.

Advantageously, the alloy comprises in addition to aluminum and magnesium at least an element chosen from the group comprising: silicon, magnesium, iron, copper, manganese, zinc, titanium and nickel.

Preferably, silicon is included in an amount of 0.2 to 2.0% by weight, with respect to the total weight of the alloy composition.

Preferably, iron is included in an amount of 0.2 to 1.0% by weight, with respect to the total weight of the alloy composition.

Preferably, copper is included in an amount of 0.02 to 0.5% by weight, with respect to the total weight of the alloy composition.

Preferably, manganese is included in an amount of 0.3 to 0.6% by weight, with respect to the total weight of the alloy composition.

Preferably, zinc is included in an amount of 0.05 to 0.25% by weight, with respect to the total weight of the alloy composition.

Preferably, titanium is included in an amount of 0.1 to 0.3% by weight, with respect to the total weight of the alloy composition.

Preferably, nickel is included in an amount of 0.005 to 0.015% by weight, with respect to the total weight of the alloy composition.

In a first preferred embodiment of the present invention the tap is carried out by using an alloy characterized in that it comprises, in addition to aluminum and magnesium, silicon in an amount of 0.25 to 0.35% by weight with respect to the total weight of the alloy composition; iron in an amount of 0.15 to 0.55% by weight with respect to the total weight of the alloy composition; copper in an amount of 0.04 to 0.08% by weight with respect to the total weight of the alloy composition; manganese in an amount of 0.35 to 0.55% by weight with respect to the total weight of the alloy composition; zinc in an amount of 0.10 to 0.15% by weight with respect to the total weight of the alloy composition; titanium in an amount of 0.15 to 0.25% by weight with respect to the total weight of the alloy composition; and nickel in an amount of 0.10 to 0.015% by weight with respect to the total weight of the alloy composition.

The tap according to the present invention can be advantageously carried out by means of a melting process using techniques known to a skilled technician. The melting process allows to obtain a tap as a raw manufactured item, which can then be further processed in order to improve the appearance and finish of the tap.

For instance the tap obtained in raw form can be simply polished. Alternatively, the tap obtained in raw form can be chromed, glazed, treated with acid or anodized according to the final aesthetic finish to be given to the product.

In order to select the type of alloy the Applicant has used a test for determining the resistance to corrosion by means of the salt-fog test, and a test for determining the resistance to corrosion in water. Said tests were carried out both with brass taps available on the market, and with taps carried out with the alloy according to the present invention.

The neutral salt-fog test consists in exposing the manufactured items to pulverization for 200 hours, with a stop of 48 hours towards the middle of the treatment, after 100 hours of pulverization. The operating conditions of the salt room are in accordance with reference norms ISO 9227 (Corrosion tests in artificial atmosphere, salt-fog tests), UNI EN 248 and UNI EN 817. The inner temperature of the room is of 38°C; the concentration of the salt solution is of 50 g/l of sodium chloride (NaCl).

The comparison of the values obtained from lab tests has showed that the taps carried out with the alloy according to the present invention have better values as far as resistance to corrosion is concerned.

Considering the values obtained from corrosion tests the taps carried out with the alloy according to the present invention are defined as sanitary taps since they are compatible with the norms ruling food regulations.

Another advantage deriving from the use of such an alloy is that, contrarily to brass, the object carried out with a composition of aluminum and magnesium does not have to be chromed.

Furthermore, the tap obtained by using an alloy comprising magnesium and aluminum has a weight that is up to 1/3 less than the one obtained with a brass or steel tap, and with definitely lower costs.

The taps carried out with an alloy comprising aluminum and magnesium as described above have been tested by means of salt attack and alkali attack tests.

The tests referred to above have shown that the tap obtained by means of an alloy comprising aluminum and magnesium are characterized by properties that have never been achieved with brass taps.

As a matter of fact, the main characteristic of said alloy is to be. stainless thanks to the presence of magnesium.

Example of qualitative/quantitative composition (in % by weight) of an alloy used for the aims of the present invention:

### Example No. 1:

Cu 0.05; Fe 0.40; Si 0.30; Mg 7.50-9.50; Mn 0.25-0.35; Zn 0.10; Ti 0.20; Ni 0.01 (global impurities Fe + Si) 0.20; the remaining portion to 100 of aluminum.

### Example No. 2:

Cu 0.05; Fe 0.40; Si 0.30; Mg 4.50-5.50; Mn 0.25-0.35; Zn 0.10; Ti 0.20; Ni 0.01 (global impurities Fe + Si) 0.20; the remaining portion to 100 of aluminum.

### Example No. 3:

Cu 0.05; Fe 0.40; Si 0.30; Mg 2.50-3.50; Mn 0.25-0.35; Zn 0.10; Ti 0.20; Ni 0.01 (global impurities Fe + Si) 0.20; the remaining portion to 100 of aluminum.

## Claims

1. Tap (1) comprising a main body (2) defining at least an inlet duct (3) and at least an outlet duct (4), a valve group (5) engaged within said main body (2) to open and close the fluid communication between said inlet (3) and outlet (4) ducts, **characterized in that** at least said main body (1) is carried out with an aluminum and magnesium alloy.

2. Tap (1) according to claim 1, **characterized in that** said alloy comprises an amount of aluminum of 92 to 98% by weight, with respect to the total weight of the alloy composition.

3. Tap (1) according to claim 1, **characterized in that** said alloy comprises an amount of magnesium of 2 to 8% by weight, with respect to the total weight of the alloy composition.

4. Tap (1) according to one or more of the claims 1 to 3, **characterized in that** said alloy has the following composition, expressed in % by weight with respect to the total weight of the alloy composition: iron 0.20 to 1.0%; silicon 0.20 to 2.0 by weight; magnesium 2 to 8% and; aluminum to 100%.

5. Use of an aluminum alloy for carrying out a tap having the characteristics as stated in one or more of the claims 1 to 4.

6. Use according to claim 5, **characterized in that** said alloy includes magnesium in an amount of 2 to 8% by weight, with respect to the total weight of the alloy composition.

7. Use according to claim 5 or 6, **characterized in that** said tap is obtained by melting the aluminum and magnesium alloy.
